# EUROPEAN PATENT APPLICATION

(11) **EP 4 238 462 A1**
(43) Date of publication of application: **06.09.2023**
(21) Application number: 23159518.2
(22) Date of filing: 01.03.2023
(51) Int. Cl.: A47J 43/044, A47J 43/07

(54) **IMMERSION BLENDER**

(30) Priority: 01.03.2022 US 202263315335 P; 19.09.2022 US 202263407940 P; 27.02.2023 US 202318114580
(71) Applicant: Whirlpool Corporation, Benton Harbor, MI 49022 (US)
(72) Inventor: Aditjandra, Antonius K., 21024 Cassinetta di Biandronno (VA) (IT); Arnold, Richard D., 21024 Cassinetta di Biandronno (VA) (IT); Howse, Lynsey A., 21024 Cassinetta di Biandronno (VA) (IT); Kasner, Rebecca K., 21024 Cassinetta di Biandronno (VA) (IT); Kempic, Joy Kathleen, 21024 Cassinetta di Biandronno (VA) (IT); Mock, Brandon Tyler, 21024 Cassinetta di Biandronno (VA) (IT); Myers, John Jay, 21024 Cassinetta di Biandronno (VA) (IT); Schutte, Nicholas Hill, 21024 Cassinetta di Biandronno (VA) (IT); Wang, Yifan, 21024 Cassinetta di Biandronno (VA) (IT); Wilson, Rex D., 21024 Cassinetta di Biandronno (VA) (IT)
(74) Representative: Spina, Alessandro

(57) **Abstract**

An immersion blender (10, 210) includes a housing (12, 212) and a battery pack (14, 214) is selectively coupled to the housing (12, 212). An implement (16, 216) includes a shaft cover (18, 218) that extends from the housing (12, 212) along an axis A. A rotatable shaft (20, 220) is located in the shaft cover (18, 218). A motor (22, 222) is located in the housing (12, 212) and is operably connected to a first end (24, 224) of the shaft (20, 220). An implement tool (26, 226) is operably connected to a second end (27, 227) of the shaft (20, 220). A user interface (28, 228) includes a power button (30, 230) and a lock button (32, 232) that are configured to activate the motor (22, 222) only while the power button (30, 230) and the lock button (32, 232) are simultaneously held.

## Description

### TECHNICAL FIELD

The present disclosure generally relates to an immersion blender, and, more specifically, to an immersion blender with a balanced construction and safety features.

### BACKGROUND

In food preparation environments, time, space, and functionality for intended purposes are of the essence. In particular, food processing appliances often include singular implements that can only be used for a specific food processing technique. Therefore, it oftentimes become necessary to have multiple food processing appliances available for recipes that require different food processing techniques. These various food processing appliances require electric power either from a wall outlet or a battery. Unfortunately, batteries have an operable life before becoming depleted and must be recharged and/or replaced. The recharging of batteries can often be inconvenient if the battery becomes depleted midway through the food processing. In addition, the various food processing appliances require different types of batteries that are specifically engineered for only one of the specific food processing appliances. Accordingly, it has been necessary to have multiple food processing appliances and specific batteries for each of the food processing appliances that need to be stored in the food processing environment. In addition, many food processing appliances include a singular on/off control button near a handle that can be inadvertently pressed simply by picking up the food processing appliance and deplete the battery and/or other electrical resources by operating the implement against the intended purpose.

United States Patent No. 7,866,879 discloses a food processing appliance that is powered by a cable connected to a wall outlet. The food processing appliance only includes a singular on/off control button near the handle. As such, this reference fails to disclose components that aid in maximizing space within a food preparation environment, allow for the use of multiple implements designed for different food processing techniques, and ensure functionality for intended purposes.

### SUMMARY OF THE DISCLOSURE

According to one aspect of the present disclosure, an immersion blender includes a housing and a battery pack selectively coupled to the housing. An implement includes a shaft cover that extends from the housing along an axis. A rotatable shaft is located in the shaft cover. A motor is located in the housing and is operably connected to a first end of the shaft. An implement tool is operably connected to a second end of the shaft. A user interface includes a power button and a lock button that are configured to activate the motor only while the power button and the lock button are simultaneously held.

These and other features, advantages, and objects of the present disclosure will be further understood and appreciated by those skilled in the art by reference to the following specification, claims, and appended drawings.

### BRIEF DESCRIPTION OF THE DRAWINGS

In the drawings:
FIG. 1 is a top, perspective front view of an immersion blender according to a first construction of the present disclosure;
FIG. 2 is a disassembled perspective front view of the immersion blender according to the first construction of the present disclosure;
FIG. 3 is a front view of the immersion blender according to the first construction of the present disclosure;
FIG. 4 is a rear view of the immersion blender according to the first construction of the present disclosure;
FIG. 5 is a side view of the immersion blender according to the first construction of the present disclosure;
FIG. 6 is a top view of the immersion blender according to the first construction of the present disclosure;
FIG. 7 is a bottom view of the immersion blender according to the first construction of the present disclosure;
FIG. 8 is a cross-sectional view of a connection system between a housing of the immersion blender of the first construction and an implement;
FIG. 9 is a top, perspective front view of an immersion blender according to a second construction of the present disclosure;
FIG. 10 is a disassembled perspective rear view of the immersion blender according to the second construction of the present disclosure;
FIG. 11 is a top view of the immersion blender according to the first construction of the present disclosure;
FIG. 12 is a bottom view the immersion blender according to the first construction of the present disclosure;
FIG. 13 schematically illustrates a control system of the immersion blender according to first construction of the present disclosure; and
FIG. 14 schematically illustrates a control system of the immersion blender according to a second construction of the present disclosure.

The components in the figures are not necessarily to scale, emphasis instead being placed upon illustrating the principles described herein.

### DETAILED DESCRIPTION

Reference will now be made in detail to specific embodiments or features, examples of which are illustrated in the accompanying drawings. Wherever possible, corresponding, or similar reference numbers will be used throughout the drawings to refer to the same or corresponding parts. Moreover, references to various elements described herein are made collectively or individually when there may be more than one element of the same type. However, such references are merely exemplary in nature. It may be noted that any reference to elements in the singular may also be construed to relate to the plural and vice-versa without limiting the scope of the disclosure to the exact number or type of such elements unless set forth explicitly in the appended claims.

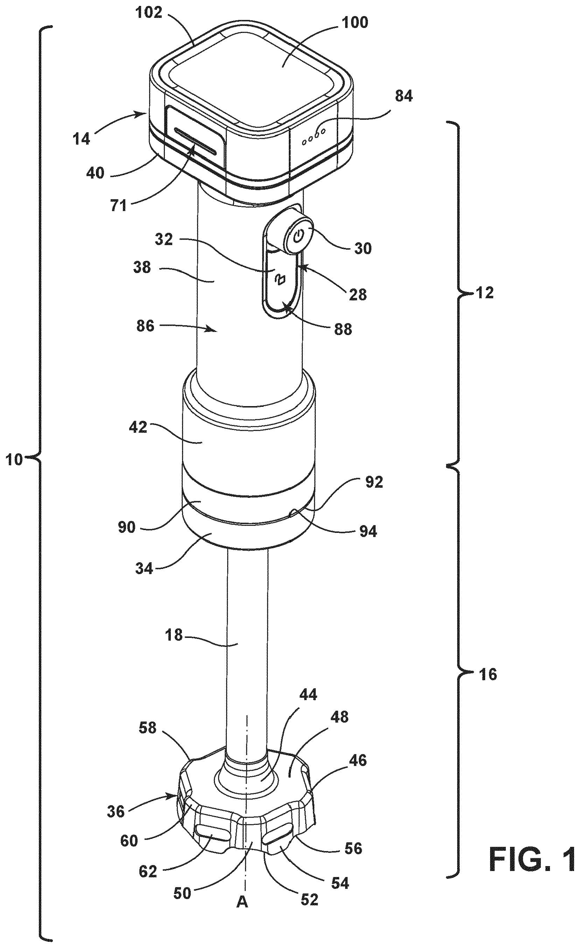

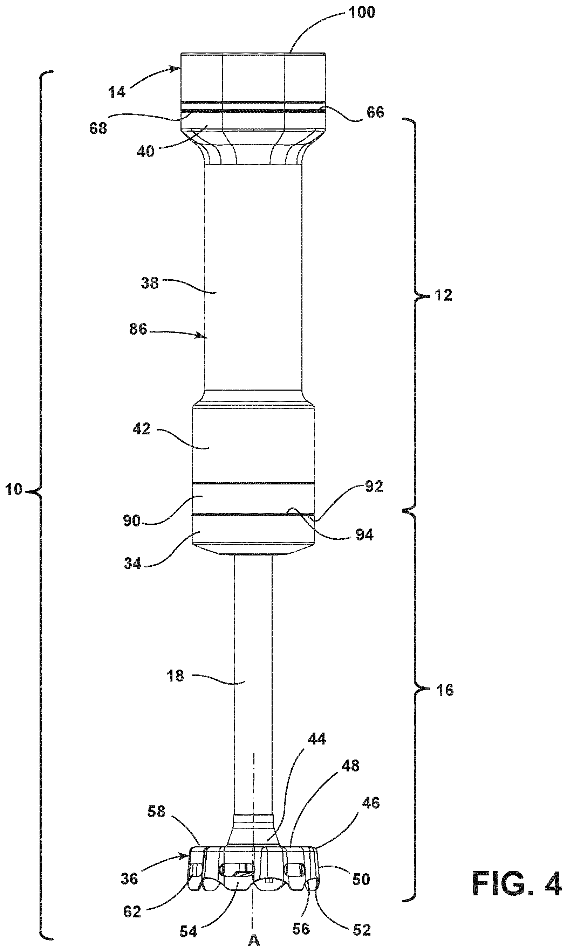

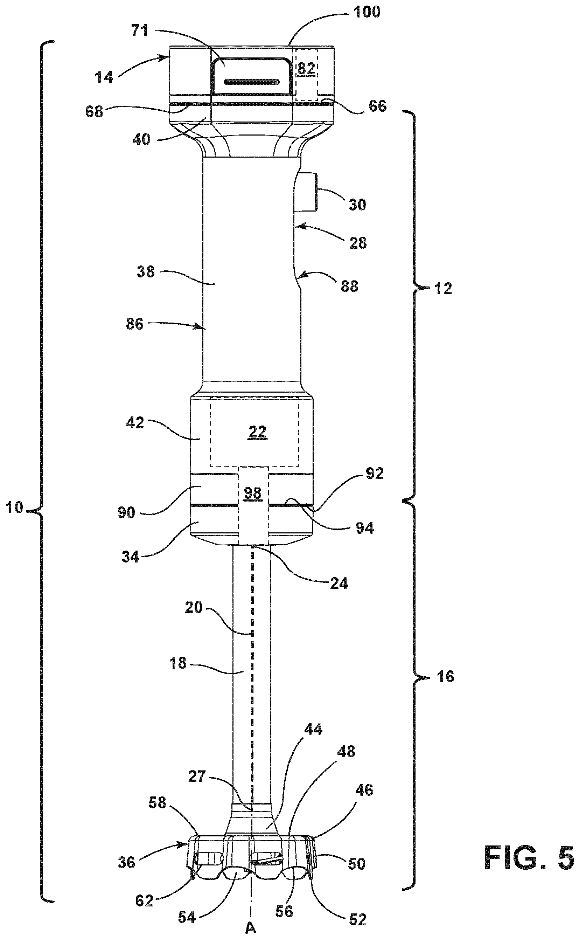

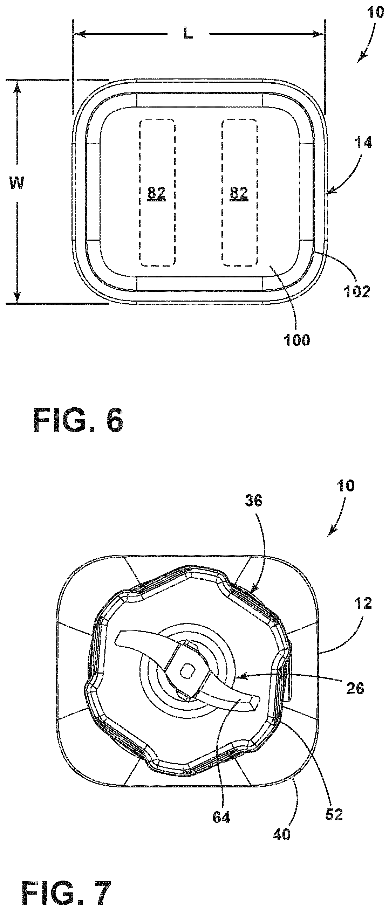

Referring now to FIGS. 1-8, reference numeral 10 generally designates an immersion blender in accordance with a first construction. The immersion blender 10 includes a housing 12 and a battery pack 14 selectively coupled to the housing 12. In this manner, battery packs different than the battery pack 14 may be utilized for extended operation of the immersion blender 10. An implement 16 includes a shaft cover 18 extending from the housing 12 along an axis A. As best illustrated in FIG. 5, a shaft 20 is located and rotatable within the shaft cover 18. A motor 22 is located in the housing 12 and operably connected to a first end 24 of the shaft 20. An implement tool 26 (FIG. 7) is operably connected to a second end 27 of the shaft 20 for selective articulation (e.g., rotation) by the motor 22. A user interface 28 includes a power button 30 and a lock button 32 that are configured to activate the motor 22 when the power button 30 and the lock button 32 are simultaneously held. In this manner, actuating the power button 30 without the lock button 32 does not activate the motor 22.

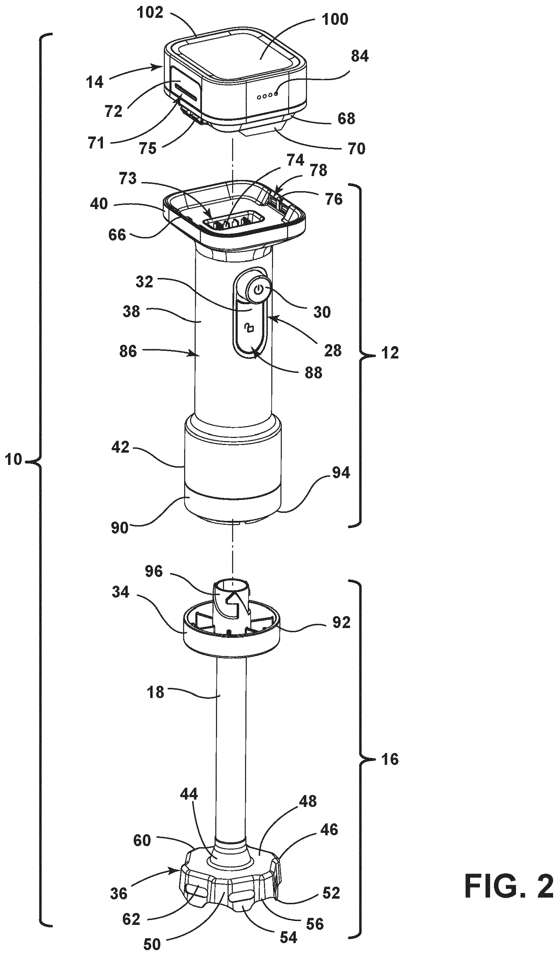

With continued reference to FIGS. 1-8, the housing 12 may be configured to be selectively connected to the implement 16. In this manner, various implements of configurations and functionalities different than the implement 16 may be utilized for different foods and processing. More particularly, the implement 16 includes a housing connection portion 34 opposite the implement tool 26. A tool cover 36 is connected to the shaft cover 18 and covers at least a portion of the implement tool 26. The housing 12 includes a handle portion 38 that extends between a battery connection portion 40 to an implement connection portion 42. The blade cover 36 includes a grip ring 44 (e.g., a collar) extending about the shaft cover 18. The blade cover 36 further includes a cup portion 46 that extends radially outwardly with respect to the axis A from the grip ring 44. The cup portion 46 includes a top surface 48 and a sidewall 50 that extends from the top surface 48 in a direction opposite the housing 12 to a rim 52. The rim 52 may define a series of teeth 54 and inset sections 56 located between each of the teeth 54. The teeth 54 may each be rounded or flat (to facilitate balancing on the blade cover 36). It should be appreciated, however, that the rim 52 may be flat or define a serpentine shape, a sinusoidal waveform, a square waveform, a ramped waveform, a pulsed waveform, and/or the like, without departing from the subject disclosure. As best illustrated in FIGS. 1 and 2, the top surface 48 may be substantially planar and extend radially from the axis A to a periphery 58. The periphery 58 may be non-circular, for example, the periphery 58 may define a series of projections 60 that are sequentially spaced around the periphery 58 and extend radially outward from the axis A. As such, the sidewall 50 may, likewise, define a generally corrugated shape. The projections 60 may extend to the inset sections 56 of the rim 52. The teeth 54 may be non-planar with the sidewall 50, for example, the teeth 54 may flare outwardly from the sidewall 50 at an acute angle. The sidewall 50 may include a series of apertures 62 for permitting a flow of processed food to exit the cup portion 46 therethrough. The apertures 62 may be elongated in a circumferential direction around the axis A and may be located above each of the teeth 54. As best illustrated in FIG. 7, the implement tool 26 may be fully or at least partially concealed within the cup portion 46. The implement tool 26 may include opposing blades 64 (FIG. 7), for example, a pair of opposing blades 64 that extend in opposite radial directions with respect to the axis A for cutting and/or blending food. It should be appreciated that unless otherwise stated, the implement tool 26 could also include other types of blending, mixing, and cutting tools that are used in various food processing techniques.

With reference now to FIG. 2, the battery connection portion 40 may include a battery connection port 66 for connection to the battery pack 14. More particularly, the battery pack 14 includes a housing connection port 68 that is selectively coupled to the battery connection port 66. The battery pack 14 further includes a terminal 70 that is located on (e.g., extends from) the housing connection port 68. The housing connection port 68 is selectively coupled to the battery connection port 66 via connection features. For example, the battery pack 14 may include at least one battery supporting member 71 that interfaces with the battery connection portion 40 (e.g., via a snap-fit connection). The battery connection port 66 may include a terminal receiving aperture 73 for accommodating the terminal 70 of the battery pack 14 therein and/or in otherwise direct contact therewith.

With continued reference to FIG. 2, in use, the housing connection port 68 can be moved onto the battery connection port 66 until the locking features become interconnected, where the terminal 70 on the battery pack 14 enters the terminal receiving aperture 73 and becomes electrically coupled with a housing terminal 74. The at least one battery supporting member 71 may include a pair of battery supporting clips 72 located on one or more sides (e.g., opposite sides) of the battery pack 14. Each of the battery supporting clips 72 may include a hook member 75 that snaps onto one or more latches 76 located in the battery connection portion 40. In some embodiments, each latch 76 is located in a pocket 78 that is sized to receive one of the battery supporting clips 72. Each of the battery supporting clips 72 may be released from engagement with one of the latches 76 via pressing the battery supporting clips 72 and articulating the hook members 75 outwardly into a non-engagement position. The battery pack 14 may include one or more battery modules 82 (FIGS. 5 and 6) configured for 12V operation or 20V operation. The battery modules 82 are non-removable from the battery pack 14 and may include Lithium Ion, Nickel-Metal Hydride, Nickel-Cadmium, and/or other materials that permit recharging. The battery pack 14 is configured such that a battery pack 14 of, potentially, a number of available compatible battery packs 14 can be selected and attached with the immersion blender 10 for powering the operation thereof by way of the electrical connection facilitated by connection of terminals 70, 74. In this manner, the battery pack 14 can be removed from the immersion blender 10 for use with another compatible kitchen appliance (such as a hand mixer, a hand blender, a countertop blender) or to be replaced with a charged battery pack 14, such as when the in-use battery modules 82 has become depleted. In this manner, a depleted battery pack 14 can be charged using a compatible charger having features, such as a USB-C connection, fast-charging terminals, components similar to the battery connection port 66 that are configured to charge, and/or the like.

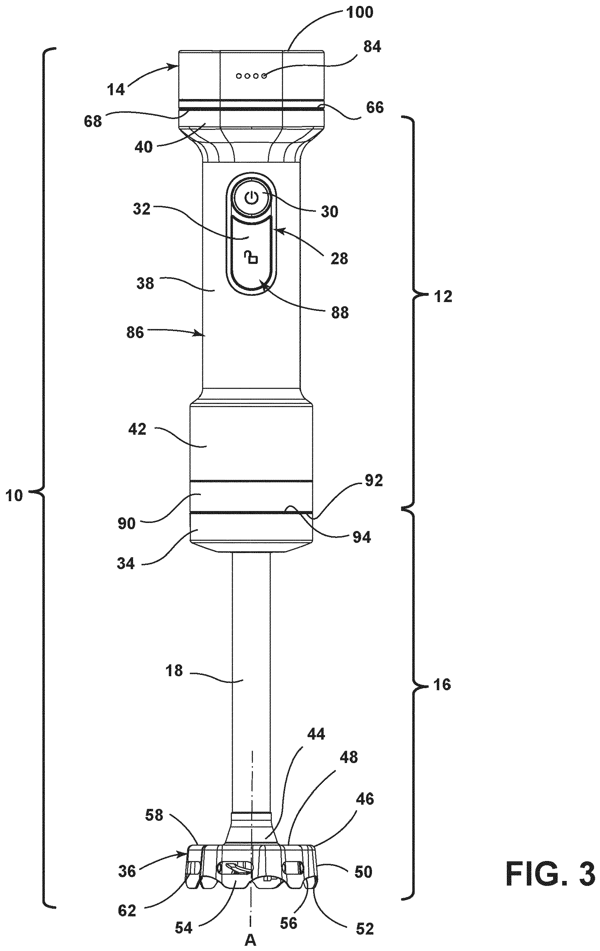

As best illustrated in FIG. 3, at least one illumination element 84 may be located on the battery pack 14. The at least one illumination element 84 may provide a charge status of the battery modules 82, a power setting (e.g., corresponding with rpms of the motor 22) of the immersion blender 10, other types of notifications that will be described below, and/or the like. In some embodiments, the at least one illumination element 84 includes a plurality of between 1 and 5 illumination elements 84, for example, between 2 and 4, between 3 and 5, 2, 3, or 4 illumination elements 84.

With reference to FIGS. 1-5, the handle portion 38 may be generally cylindrically shaped and include a radius and/or cross-section smaller than that of the battery connection portion 40 to prevent upward slippage of a user's hand during use. The handle portion 38 includes a surface, for example, a smooth surface 86 extending circumferentially about the axis A and substantially the entire distance between the battery connection portion 40 and the implement connection portion 42. The smooth surface 86 may be co-molded with the handle portion 38, over molded, or otherwise formed as a sleeve that goes over the handle portion 38, which may be pre-molded. The smooth surface 86 may provide aesthetic and/or utilitarian (e.g., ergonomic) benefits. The user interface 28 includes the power button 30 and the lock button 32. It should be appreciated that the term "button" may include other forms of switches, toggles, mechanical, and/or electrical (e.g., touch button) sensors. As best illustrated in FIG. 7, the lock button 32 may be located in a small depression 88 located on the user interface 28. As such, the lock button 32 may be slightly inset from the radius and/or cross-section of the handle portion 38 to prevent unintentional activation. In some embodiments, the power button 30 may extend outwardly from the handle portion 38 (e.g., radially outwardly from the handle portion 38 with respect to the axis A). In some embodiments, the user interface 28 is located on the same side as the at least one illumination element 84. In some embodiments, the transition between the battery connection portion 40 and the handle portion 38 and the transition between the handle portion 38 and the implement connection portion 42 may be tapered in an arched or curved manner.

With continued reference to FIGS. 1-5, the implement connection portion 42 of the housing 12 may have a generally cylindrical shape with a larger radius and/or cross-section than that of the handle portion 38 to prevent downward slippage of a user's hand during use. The implement connection portion 42 may include a band 90 disposed around the handle portion 38 opposite the battery connection portion 40. The implement connection portion 42 further includes an implement connection port 92 (FIG. 2), which may be disposed on a side of the band 90 that is opposite the handle portion 38. In some embodiments, the smooth surface 86 may be formed of an elastic material and/or a matte material that extends between the implement connection port 92 and the battery connection port 66. In some embodiments, the band 90 and the implement 16 may be formed of a metal material and/or a material exhibiting an easy-to-clean surface, such a chromic surface. In some embodiments, the shaft cover 18 may be polished. In some embodiments, the lock button 32 may be formed of the elastic material and/or a matte material and the power button 30 may be formed of the metal and/or easy-to-clean surface material.

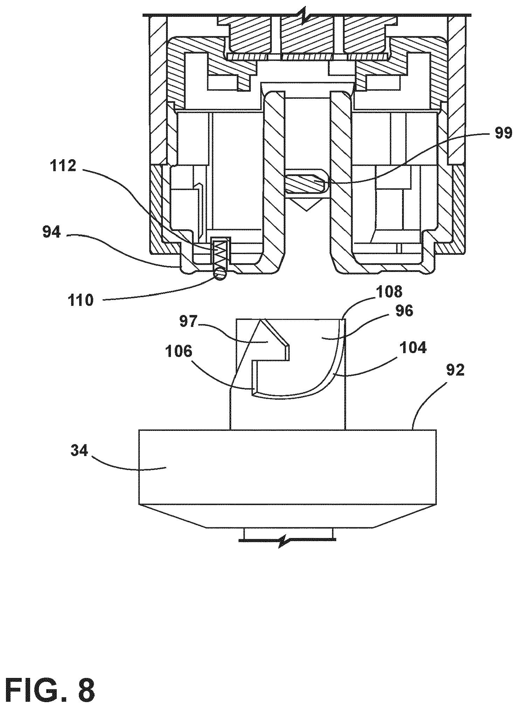

With reference now to FIGS. 2 and 8, the housing connection portion 34 includes a handle connection port 94 for connecting to the implement connection port 92. The implement connection port 92 includes a track 96 with a hook-shaped interlock 97 and the handle connection port 94 includes a protrusion 99 (FIG. 8) that becomes interlocked with the track 96 upon insertion and relative rotation. In this manner, the implement 16 is configured such that an implement of, potentially, a number of available implements can be selected and attached with the immersion blender 10 for various food processing techniques.

With reference to FIG. 5, the motor 22 becomes electrically connected to the battery modules 82 of the battery pack 14 upon connection between the battery pack 14 and the housing 12 (e.g., the terminals 70, 74). The motor 22 may include a rotor 98 and one or more rotational bearings may be located in the handle connection port 94 and/or the implement 16 (not shown) for keeping the shaft 20 aligned with the axis A during rotation. The first end 24 of the shaft 20 and rotor 98 may become intermeshed upon connection of the handle connection port 94 and the implement connection port 92. More particularly, the shaft 20 and the rotor 98 may become intermeshed via a splined surface and toothed aperture, a gear mechanism, interlocking surfaces, the like, and/or combinations thereof (not shown). The second end 27 of the shaft 20 may be connected to the implement tool 26 for conjoint articulate (e.g., rotation) therewith. In some embodiments, the band 90 may be axially aligned and generally extend about the motor 22 to directly dampen centrifugal forces and other vibrations.

With reference to FIG. 6, the battery pack 14 may generally have a perimeter defined by a length "L" and a width "W." In some embodiments, the length L is slightly larger than the width W, for example, by 20% or less. The battery connection portion 40 may have a similarly sized perimeter as the battery pack 14. As such, the battery pack 14 in combination with the battery connection portion 40 may generally have a rectangular prism shape with rounded edges.

With reference again generally to FIGS. 1-8, the immersion blender 10 may be symmetrically balanced along the axis A. More particularly, the handle portion 38 connects centrally to the battery connection portion 40 (e.g., about a center of the width W distance and the length L distance and/or about a center of mass between the width W and the length L). In some embodiments, a center of mass of the battery pack 14, the housing 12, and the implement 16 may be substantially aligned along (e.g., within about 90%) the axis A. The battery pack 14 may include a major surface 100. As such, the immersion blender 10 can be placed with the major surface 100 on a horizontal surface within the environment and remain freestanding (wherein the axis A is oriented in a vertical position) between uses and foodstuff from the implement tool 26 may largely be captured by the cup portion 46. The major surface 100 may include one or more supporting ribs 102. For example, the one or more supporting ribs 102 may follow an outer perimeter of the major surface 100 to generally assist with balancing the immersion blender 10 on the battery pack 14. The one or more supporting ribs 102 may be formed of an elastic material with a high friction coefficient. In some embodiments, the band 90 may be non-symmetrical and include more weight on sides that are perpendicular to the length L of the battery connection portion 40. Likewise, it should be appreciated that the immersion blender 10 may be balanced on the blade cover 36.

With reference now to FIG. 8, the handle connection port 94 and the implement connection port 92 are shown cross-sectionally in a disconnected state. The track 96 is defined between the hook-shaped interlock 97 and a bottom cam surface 104. The bottom cam surface 104 may be substantially arch-shaped (e.g., completely arch-shaped). More particularly, the cam surface 104 extends from a first cam end 106 that is located under the hook-shaped interlock 97 to a second cam end 108 that defines an entry port of the protrusion 99 on the handle connection port 94. In some embodiments, there are no corners along the length of the cam surface 104, such that insertion of the protrusion 99 is smooth and uninterruptedly guided by the arch shape of the cam surface 104. The handle connection port 94 includes a detent 110 that is biased towards the implement connection port 92 by a spring 112 (e.g., a helical spring). In this manner, the detent 110 may urge the protrusion 99 into contact with the hook-shaped interlock 97 to secure the implement connection port 92 to the handle connection port 94. However, it should be appreciated that in other embodiments, the detent 110 becomes interlocked or otherwise pushed (i.e., by the spring 112) within the implement connection port 92 upon complete connection (e.g., via relative turning) between the handle connection port 94 and the implement connection port 92. Upon complete connection, the detent 110 may be configured to snap into place and create an audible click noise to notify a user that connection is complete. In some embodiments, the housing connection portion 34 includes a plurality of tracks 96 and hook-shaped interlocks 97 disposed equidistant around the axis A and the implement connection port 92 has an equal number of protrusions 99 equally spaced. For example, the housing connection portion 34 may include three separate tracks 96 and hook-shaped interlocks 97 and the implement connection port 92 includes three protrusions 99.

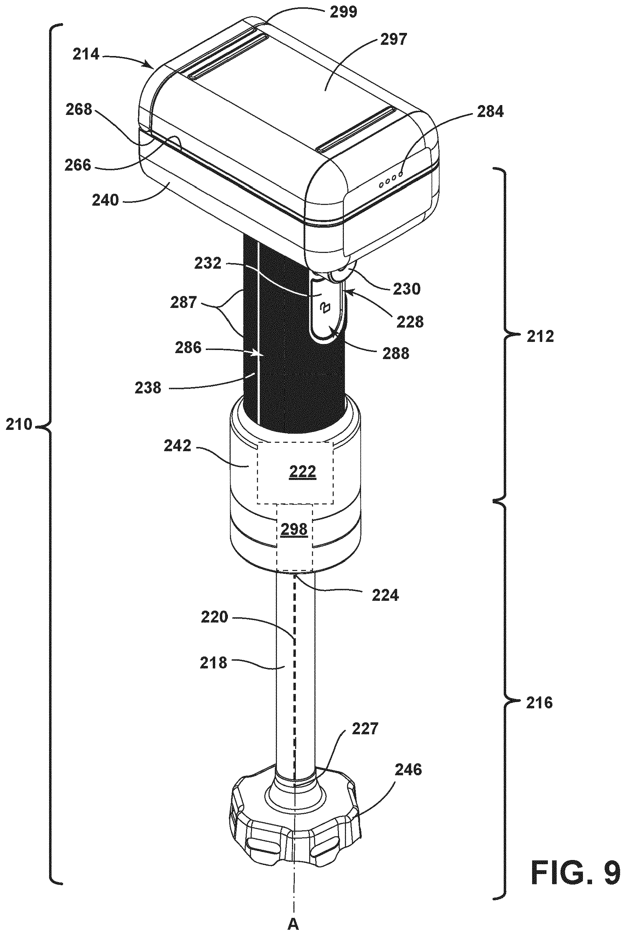

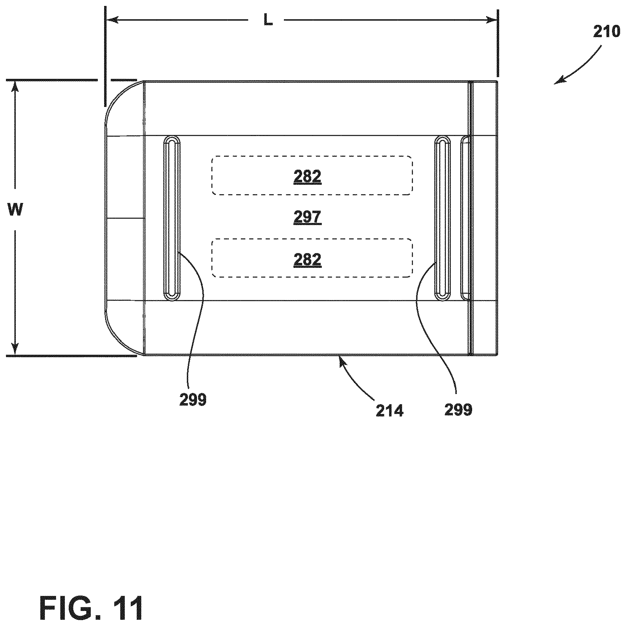

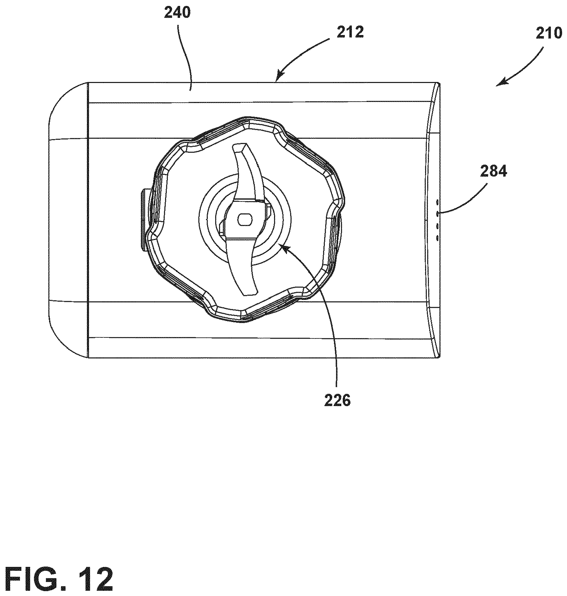

Referring now to FIGS. 9-12, reference numeral 210 generally designates an immersion blender that generally extends along an axis A in accordance with a second construction. Unless otherwise indicated, the immersion blender 10, 210 in accordance with the first and second constructions may share all of the same features, constructions, materials, and functionalities. More particularly, the immersion blender 210 includes a housing 212 and a battery pack 214 selectively coupled to the housing 212. In this manner, battery packs different than the battery pack 214 may be utilized for extended operation of the immersion blender 210. An implement 216 includes a shaft cover 218 extending from the housing 212 along an axis A. A shaft 220 is located and rotatable within the shaft cover 218. A motor 222 is located in the housing 212 and operably connected to a first end 224 of the shaft 220 (e.g., via a rotor 298). An implement tool 226 (FIG. 11) is operably connected to a second end 227 of the shaft 220 for selective articulation (e.g., rotation) by the motor 222. A user interface 228 includes a power button 230 and a lock button 232 that are configured to activate the motor 222 when the power button 230 and the lock button 232 are simultaneously held. In this manner, actuating the power button 230 without the lock button 232 does not activate the motor 222.

With continued reference to FIGS. 9-12, the immersion blender 210 may include a modified handle portion 238 that includes a surface, for example, a textured surface 286 extending circumferentially about the axis A and substantially the entire distance between a battery connection portion 240 and an implement connection portion 242. In some embodiments, the textured surface 286 may include a series of ribs 287 that defined irregularities, such as a wave-type pattern that fluctuates in a direction of the axis A. The textured surface 286 may be co-molded with the handle portion 238, over molded, or otherwise formed as a sleeve that goes over the handle portion 238, which may be pre-molded. The textured surface 286 (e.g., the ribs 287) may prevent slippage of a user's hand during use. The textured surface 286 may define an opening that exposes the user interface 228 that includes the power button 230 and the lock button 232. It should be appreciated that the textured surface 286 of the second construction may be incorporated into the immersion blender 10 of the first construction and, likewise, the smooth surface 86 may be incorporated into the immersion blender 210 of the second construction. The lock button 232 may be located in a small depression 288 located on the user interface 228. As such, the lock button 232 may be slightly inset from the radius and/or cross-section of the handle portion 238 to prevent unintentional activation. In some embodiments, the power button 230 may extend outwardly from the handle portion 238 (e.g., radially outwardly from the handle portion 238 with respect to the axis A).

With continued reference to FIGS. 9-12, the battery connection portion 240 may be modified for accommodating a modified battery pack 214. More particularly, the battery pack 214 of the second construction may be generally larger than that of the first construction. For example, the battery pack 214 may generally have a perimeter defined by a length "L" and a width "W." In some embodiments, the length L is notably larger than the width W, for example, by 20% or more (e.g., 25% or more). The battery connection portion 240 may have a similarly sized perimeter as the battery pack 214. As such, the battery pack 214 in combination with the battery connection portion 240 may generally have a rectangular prism shape with rounded edges on a side opposite the user interface 228 and square edges on a side of the user interface 228. In some embodiments, the transition between the battery connection portion 240 and the handle portion 238 and the transition between the handle portion 238 and the implement connection portion 242 may be tapered in an arched or curved manner. The immersion blender 210 may be symmetrically balanced along the axis A. More particularly, the handle portion 238 connects centrally to the battery connection portion 240 (e.g., about a center of the width W distance and the length L distance and/or about a center of mass between the width W and the length L). In some embodiments, a center of mass of the battery pack 214, the housing 212, and the implement 216 may be substantially aligned along (e.g., within about 90%) the axis A.

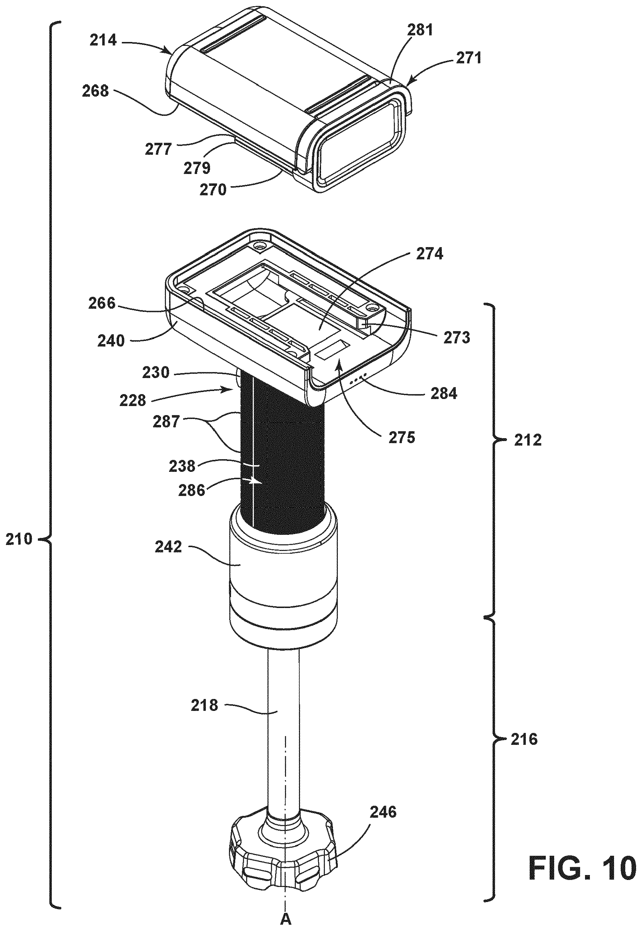

With reference now to FIG. 10, the battery connection portion 240 may include a battery connection port 266 for connection to the battery pack 214. More particularly, the battery pack 214 includes a housing connection port 268 that is selectively coupled to the battery connection port 266. The battery pack 214 further includes a terminal 270 that is located on (e.g., extends from) the housing connection port 268. The housing connection port 268 is selectively coupled to the battery connection port 266 via connection features. For example, the battery pack 214 and/or the battery connection port 266 may include at least one battery supporting member 271 that selectively locks the battery connection portion 240 to the housing connection port 268 (e.g., via a pressure-fit connection). The battery connection port 266 may include a pair of opposing overhangs 273 defining an inlet 275 and the housing connection port 268 of the battery pack 214 may include a projection 277 with a pair of guide flanges 279 that interface with the overhangs 273. In this manner, the battery pack 214 may be connected to the battery connection port 268 by inserting the projection 277 into the inlet 275 in a direction perpendicular to the axis A, where the overhangs 273 interface with and guide the flanges 279 until the battery supporting member 271 is locked. Each of the battery supporting members 271 may be released from engagement by articulating the battery supporting members 271 into a non-engagement position. The terminal 270 may be located in the inlet 275 and the projection 277 may include a housing terminal 274 that comes into electrical contact with the terminal 270 upon insertion of the projection 277 into the inlet 275. The battery supporting member 271 may include a lever 281 that is pivotally connected to the battery pack 214 and articulates between the non-engagement position and an engaged or locked position that presses the battery pack 214 (e.g., the projection 277) into locked engagement with the inlet 275.

With reference to FIGS. 10 and 11, the battery pack 214 of the second construction may include one or more battery modules 282 configured for 12V operation or 20V operation. The battery modules 282 are non-removable from the battery pack 214 and may include Lithium Ion, Nickel-Metal Hydride, Nickel-Cadmium, and/or other materials that permit recharging. The battery pack 214 is configured such that a battery pack 214 of, potentially, a number of available compatible battery packs 214 can be selected and attached with the immersion blender 210 for powering the operation thereof by way of the electrical connection facilitated by the connection of terminals 270, 274. In this manner, the battery pack 14 can be removed from the immersion blender 210 for use with another compatible kitchen appliance (such as a hand mixer, a hand blender, a countertop blender) or replaced with a charged battery pack 214, such as when the in-use battery modules 282 becomes depleted. In this manner, a depleted battery pack 214 can be charged using a compatible charger having features, such as a USB-C connection, fast-charging terminals, components similar to the battery connection port 266 that are configured to charge, and/or the like. The battery pack 214 (FIG. 8) or the housing 212 (FIG. 9) may define one or more illumination elements 284 of similar numerosity and function as the illumination elements 84 of the first construction.

With reference now to FIGS. 9-11, the battery pack 214 may include a major surface 297. As such, the immersion blender 210 can be placed with the major surface 297 on a horizontal surface within the environment and remain freestanding (wherein the axis A is oriented in a vertical position) between uses and foodstuff from the implement tool 226 may largely be captured by a cup portion 246. The major surface 297 may include one or more supporting ribs 299. For example, the one or more supporting ribs 299 may follow an outer perimeter of the major surface 297 to generally assist with balancing the immersion blender 210 on the battery pack 214. The one or more supporting ribs 299 may be formed of an elastic material with a high friction coefficient.

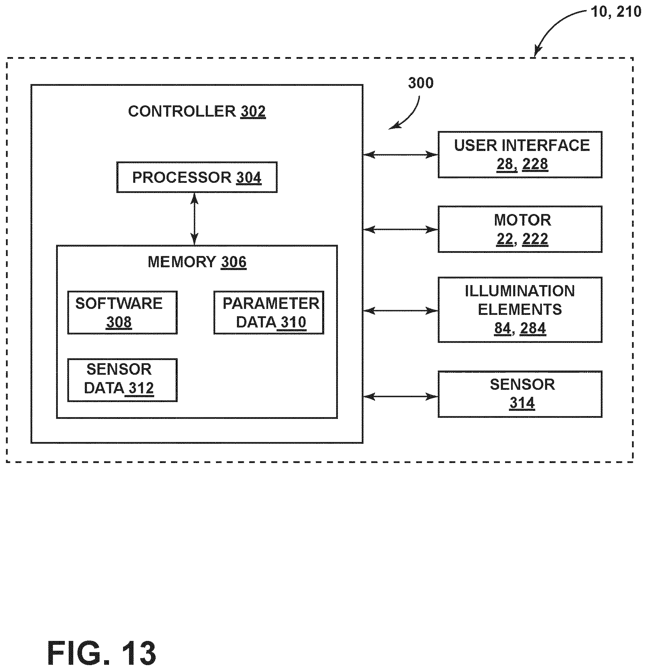

With reference now to FIG. 13, a control system 300 is located in the housing 12, 212 and/or the battery pack 14, 214. The control system 300 may include a controller 302. The controller 302 may include a processor 304 and a memory 306. The processor 304 may include any suitable processor 304. Additionally, or alternatively, the controller 302 may include any suitable number of processors, in addition to or other than the processor 304. The memory 306 may comprise a single disk or a plurality of disks (e.g., hard drives), and includes a storage management module that manages one or more partitions within the memory 306. In some embodiments, the memory 306 may include flash memory, semiconductor (solid state) memory, or the like. The memory 306 may include Random Access Memory (RAM), a Read-Only Memory (ROM), or a combination thereof. The memory 306 may include instructions that, when executed by the processor 304, cause the processor 304 to, at least, perform the functions associated with the components of the immersion blender 10, 210. The user interface 28, 228, the motor 22, 222, and the illumination elements 84, 284 may, therefore, respond to instructions from the controller 302. The memory 306 may, therefore, include software 308, parameter data 310 (e.g., which of the power button 30, 230 and the lock button 32, 232 are being activated, a power setting, and/or the like), and sensor data 312 (e.g., temperature data from the components of the immersion blender 10, 210, viscosity or other statuses of the blended materials via resistance on the implement tool 26, 226, battery status, and/or the like). One or more sensors 314 may also be located in the immersion blender 10, 210 to provide the sensor data 312.

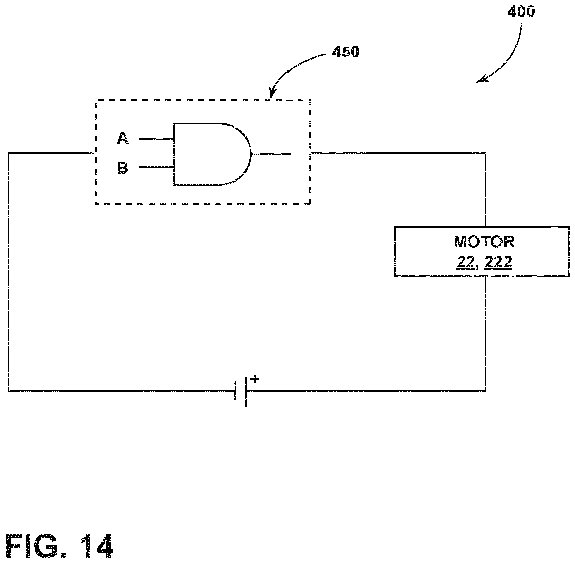

It should be appreciated that the control system 300 may include other configurations without departing from the subject disclosure. For example, FIG. 14 illustrates that a control system 400 of a second construction may include a logic circuit 450 (e.g., on a PCB) with basic logic functionality with or without other components (e.g., processor 304 and memory 306). The logic circuit 450 may include one or more gate modules with primary logic relationships, such as "AND" and "NOT," where holding the power button 30, 230 (input "A") and the lock button 32, 232 (input "B") simultaneously (e.g., an overlap of time where both buttons 30, 230, 32, 232 are pressed, or a pressing of both buttons 30, 230, 32, 232 at the same time) is required to operate the motor 22, 222 and, thus, rotate the implement tool 26, 226. Accordingly, in some embodiments, pressing only one of the power buttons 30, 230 or the lock button 32, 232 does not operate the motor 22, 222. The lock button 32, 232 may be biased such that a significant amount of force is required for actuation.

It should also be appreciated that the buttons 30, 230, 32, 232 described herein may be configured as simple mechanical buttons that do not require control systems 300, 400 to operate functionalities of the immersion blender 10, 210. In such arrangements, the illumination elements 84 may be controlled via battery pack 14.

Accordingly, the control system 300, 400 (or mechanical configured buttons 30, 230, 32, 232) may be configured such that the motor 22, 222 can only be operated if the power button 30, 230 and the lock button 32, 232 are simultaneously held. As such, the immersion blender 10, 210 provides additional safety by preventing unintentional running of the motor 22, 222. In some embodiments, both the power button 30, 230 and the lock button 32, 232 need to be continuously pressed to operate the motor 22, 222, where the motor 22, 222 stops upon releasing either the power button 30, 230, the lock button 32, 232, or both the power button 30, 230 and the lock button 32, 232.

In some embodiments, the control system 300, 400 may further be configured to notify a user (e.g., via the illumination elements 84, 284) of a battery status, temperature information (e.g., overheating) of the components of the immersion blender 10, 210, status of the blended materials, status of the activated buttons (e.g., that only one of the power button 30, 230 and the lock button 32, 232 is activated), a power setting (e.g., low, medium, high), and/or the like. The notification may include the number of the illumination elements 84, 284 that are illuminated, a color of the illumination, and/or an intensity of the illumination.

In some embodiments, the immersion blender 10, 210 includes a method of operation. Initially, the power button 30, 230 or the lock button 32, 232 is pressed. Next, the other of the power button 30, 230 and the lock button 32, 232 are pressed thereby activating the motor 22, 222. It should be appreciated that the motor 22, 222 may also be activated by pressing both the power button 30, 230 and the lock button 32, 232 at the same time rather than in sequence. Next, either the power button 30, 230 or the lock button 32, 232 is released to deactivate the motor 22, 222.

While aspects of the present disclosure have been particularly shown and described with reference to the embodiments above, it will be understood by those skilled in the art that various additional embodiments may be contemplated by the modification of the disclosed methods without departing from the spirit and scope of what is disclosed. Such embodiments should be understood to fall within the scope of the present disclosure as determined based upon the claims and any equivalents thereof.

## Claims

1. An immersion blender (10, 210) comprising:
a housing (12, 212);
a battery pack (14, 214) selectively coupled to the housing (12, 212);
an implement (16, 216) including a shaft cover (18, 218) extending from the housing (12, 212) along an axis A;
a rotatable shaft (20, 220) located in the shaft cover (18, 218);
a motor (22, 222) located in the housing (12, 212) and operably connected to a first end (24, 224) of the shaft (20, 220);
an implement tool (26, 226) operably connected to a second end (27, 227) of the shaft (20, 220); and
a user interface (28, 228) including a power button (30, 230) and a lock button (32, 232) configured to activate the motor (22, 222) only while the power button (30, 230) and the lock button (32, 232) are simultaneously held.

2. The immersion blender (10, 210) of claim 1, wherein the battery pack (14, 214) is configured for one of 12V or 20V operation.

3. The immersion blender (10, 210) of either one of claims 1 or 2, wherein the housing (12, 212) defines a handle portion (38, 238), a battery connection portion (40, 240), and an implement connection portion (42, 242), the handle portion (38, 238) located between the battery connection portion (40, 240) and the implement connection portion (42, 242).

4. The immersion blender (10, 210) of claim 3, wherein the handle portion (38, 238) defines a cross-section that is smaller than a cross-section of the battery connection portion (40, 240) and the implement connection portion (42, 242).

5. The immersion blender (10, 210) of any one of claims 1-4, wherein the implement (16, 216) is selectively coupled to the implement connection portion (42, 242).

6. The immersion blender (10, 210) of any one of claims 1-5, wherein the battery pack (14, 214) includes a major surface (100, 297) and the immersion blender (10, 210) is configured to stably rest on the major surface (100, 297) with the axis A in a vertical orientation.

7. The immersion blender (10, 210) of any one of claims 1-6, wherein the battery pack (14, 214) includes a perimeter defined by a length L and a width W and the handle portion (38, 238) is substantially aligned with a center of mass of the battery pack (14, 214) between the length L and the width W.

8. The immersion blender (10, 210) of any one of claims 3-7, wherein the implement connection portion (42, 242) defines a handle connection port (94) with a detent (110) that audibly snaps into place upon a complete connection between the housing (12, 212) and the implement (16, 216).

9. The immersion blender (10, 210) of claim 8, wherein the implement (16, 216) includes an implement connection port (92) with a track (96) defined between a hook-shaped interlock (97) and a bottom cam surface (104), and the bottom cam surface (104) is entirely arch-shaped.

10. The immersion blender (10, 210) of claim 9, wherein the handle connection port (94) includes a protrusion (99) that is guided by the bottom cam surface (104) into engagement with the hook-shaped interlock (97).

11. The immersion blender (10, 210) of any one of claims 1-10, wherein the lock button (32, 232) is located in a depression (88, 288).

12. The immersion blender (10, 210) of any one of claims 1-11, wherein the power button (30, 230) extends outwardly from the handle portion (38, 238).

13. The immersion blender (10, 210) of any one of claims 1-12, wherein at least one of the power button (30, 230) and the lock button (32, 232) is configured as a touch button.

14. The immersion blender (10, 210) of any one of claims 1-13, wherein the battery pack (14, 214) is rechargeable.

15. The immersion blender (10, 210) of any one of claims 1-14, wherein at least one of the battery pack (14, 214) and the handle portion (38, 238) includes a battery supporting member (71, 271) that selectively locks the battery pack (14, 214) to the handle portion (38, 238).
